# EUROPÄISCHE PATENTSCHRIFT

(11) **EP 3 898 465 B1**
(45) Veröffentlichungstag und Bekanntmachung des Hinweises auf die Patenterteilung: **15.07.2026**
(21) Anmeldenummer: 19824279.4
(22) Anmeldetag: 12.12.2019
(51) Int. Cl.: B65G 23/16, B65G 43/08, B65G 15/42, B65G 17/12

(54) **SYNCHRONISATION VON FÖRDER- UND ANTRIEBSGURT EINES STEILFÖRDERERS**
SYNCHRONIZATION OF CONVEYOR BELT AND DRIVE BELT OF AN INCLINED CONVEYOR
SYNCHRONISATION D'UNE BANDE TRANSPORTEUSE ET D'UNE BANDE D'ENTRAÎNEMENT D'UNE CHAÎNE TRANSPORTEUSE À FORTE PENTE

(30) Priorität: 21.12.2018 DE 102018222857
(43) Veröffentlichungstag der Anmeldung: 27.10.2021
(73) Patentinhaber: Rema Tip Top AG, 85586 Poing (DE)
(72) Erfinder: BUSSE, Günter, 85622 Feldkirchen (DE)
(74) Vertreter: MERH-IP Matias Erny Reichl Hoffmann Patentanwälte PartG mbB
(86) Internationale Anmeldenummer: PCT/EP2019/084928
(87) Internationale Veröffentlichungsnummer: WO 2020/126835

(56) Entgegenhaltungen:
- WO-A1-2005/035404
- WO-A1-2018/153651
- DE-A1- 3 235 471

## Beschreibung

Die Erfindung betrifft eine Vorrichtung zum gesteuerten Antreiben eines Steilförderers und ein Verfahren zur Steuerung eines Steilförderers, wobei durch eine Synchronisation des Förder- und Antriebsgurts eine Verringerung des Verschleißes, eine Verlängerung der Lebensdauer der Komponenten und/oder ein möglichst reibungsarmer Betrieb ermöglicht wird.

Ein Steilförderer hat die Aufgabe Fördergut bzw. Schüttgut schräg bis senkrecht nach oben zu transportieren. Hierbei weist der Fördergurt antriebsseitig zumeist entsprechende Antriebsprofile auf. Die Förderseite des Fördergurts ist beispielsweise mit Mitnahmevorrichtungen ausgestattet, beispielsweise Wellkanten mit Querstollen oder förderseitig angebrachte Becher.

Der Antrieb des Fördergurts erfolgt üblicherweise über die Antriebsprofile durch den Eingriff von beispielsweise Stangen, die auf dem umlaufend angetriebenen Antriebsgurt montiert sind. Abhängig von der Länge des Fördergurts können mehrere Förderantriebssysteme entlang der Förderstrecke installiert sein, um so über bestimmte Förderabschnitte den Fördergurt zu bewegen und die erforderlichen Antriebskräfte dosiert einzuleiten.

Da der Fördergurt neben dem Eigengewicht in Abhängigkeit von Vorspannung und Beladezustand über die unterschiedlich geneigte (flach, schräg, senkrecht, hangabwärts) Förderstrecke unterschiedlich gedehnt ist, kann es zu einer Erhöhung von Verschleiß und einer Verringerung der Lebensdauer des Kopplungssystems von Fördergurt und Antriebsgurt kommen, da sich eine veränderte Teilung bzw. ein veränderter Abstand der Zahnprofile des Fördergurts ergeben kann. Dadurch passen die Zahnprofile des Fördergurts nicht mehr optimal in die Kopplungsprofile des Förderantriebssystems, so dass es zu einem erhöhten Verschleiß der Komponenten bis hin zu einem Überspringen des Antriebssystems kommen kann.

In der WO 2018/153651 A1**,** welche die Merkmale des Oberbegriffs der Ansprüche 1 und 13 offenbart, ist ein Gurtförderer mit Traggurt und einem Treibgurt gezeigt. Zum Antrieb von Treib- und Traggurt ist ein Antriebssystem vorgesehen. Das Antriebssystem weist einen Antrieb für den Traggurt und einen Antrieb für den umlaufenden Treibgurt auf. Für die Spannung von Traggurt und Treibgurt ist eine Spannvorrichtung vorgesehen. Die von der Spannvorrichtung eingeleitete Spannkraft wirkt mittels eine dem Traggurt zugeordneten Umlenktrommel und einer mit dieser mechanisch gekoppelten dem Treibgurt oder Treibgurten zugeordneten Umlenktrommeln auf den Traggurt und den Treibgurt bzw. den Treibgurten. Dadurch ist für die Spannung von Traggurt und Treibgurt bzw. Treibgurten nur eine Spannvorrichtung erforderlich.

Die DE 32 35 471 A1 zeigt einen Kratzerförderer mit einer Förderrinne und darin längsbeweglich geführtem, wobei Mitnehmer vorgesehen sind, die kraftschlüssig hinter die Kratzer greifen und die Antriebskraft unmittelbar in die Kratzer einleiten.

Die WO 2005/035404 A1 ist eine weitere Fördervorrichtung mit einer Rohrförderschaltung und endlosen Fördermitteln die durch die Rohrförderschaltung zirkulieren.

Es ist eine Aufgabe der Erfindung eine Vorrichtung zum gesteuerten Antreiben eines Steilförderers und ein Verfahren zur Steuerung eines Steilförderers zu schaffen, die einen verringerten Verschleiß und eine Erhöhung der Lebensdauer der Antriebskomponenten ermöglichen.

Erfindungsgemäß ist eine Vorrichtung zur zum gesteuerten Antreiben eines Steilförderers vorgesehen, die eine Steuereinheit aufweist, welche eine Synchronisation von Förder- und Antriebsgurt des Steilförderers derart ermöglicht, dass ein exakter Eingriff zwischen den Kopplungsprofilen des Förderantriebssystems und den Zahnprofilen des Fördergurts erfolgt.

Dadurch kann die Lebensdauer des Gesamtsystems deutlich erhöht werden, da ein verringerter Verschleiß der Komponenten vorliegt.

Durch eine unterschiedliche Beladung des Fördergurts, das Eigengewicht des Fördergurts, durch eingeleitete Vorspannungen in den Fördergurt und durch unterschiedliche E-Module einzelner Fördergurtabschnitte ergeben sich über die Förderstrecke unterschiedliche Dehnungen des Fördergurts. Diese unterschiedlichen Dehnungen führen wiederum zu unterschiedlichen Abständen der Zahnprofile über die Förderstrecke.

Erfindungsgemäß ist eine Sensoreinheit zur Ermittlung eines Gewichts des Förderguts inklusive des Gewichts des Fördergurts vorgesehen, wobei das Gewicht (bzw. Teilgewichte) bestimmten Teilbereichen des Fördergurts zugewiesen wird. Die Steuereinheit kann jedem Teilbereich des Fördergurts ein bestimmtes Gewicht zuordnen (digitaler Zwilling).

Weiterhin kann die Steuereinheit aus den unterschiedlichen Teilgewichten eine Länge L der jeweiligen Teilbereiche T in einem Steilförderbereich S des Fördergurts ermitteln. Aus diesen Teillängen kann die Steuereinheit dann die gewünschten Abstände B der Kopplungsprofile des Antriebsgurts über den Steilförderbereich S ermitteln und eine Dehnung des Antriebsgurts derart einstellen, dass sich eine synchronisierte und angepasste Teilung der Kopplungsprofile zu den Zahnprofilen ergibt.

Anstatt einen Achsabstand C von Umlenkrollen des Förderantriebssystems einzustellen, ist es auch möglich über eine oder mehrere Zusatzrollen eine entsprechende Dehnkraft in den Antriebsgurt einzubringen.

Weiterhin sei ausdrücklich angemerkt, dass die Zahnprofile an dem Antriebsgurt und die Kopplungsprofile an dem Fördergurt vorgesehen sein können (umgekehrt zu der im Folgenden beschriebenen Ausführung).

Durch den angepassten Abstand der in die Zahnprofile eingreifenden Kopplungsprofile des Antriebsgurts ist ein optimaler Eingriff und damit eine optimale Kraftübertragung möglich, so dass ein geringerer Verschleiß durch Relativbewegungen, eine längere Lebensdauer der Komponenten und ein reibungsarmer Betrieb realisiert wird. Weiterhin kann sichergestellt werden, dass kein Überspringen des Antriebssystems erfolgt und auch Betriebsereignisse wir ein Ausfall eines oder mehrerer Antriebssysteme nicht zu einem Problem führt.

Die Synchronisation des Förder- und Antriebsgurts kann durch eine variable Einstellung der Vorspannung und damit der Dehnung des Antriebsgurts erfolgen, so dass die montierten Kopplungsprofile des Antriebsgurts in ihrer Teilung zur jeweils aktuellen Teilung der Zahnprofile des Fördergurts eingestellt werden.

Um die Dehnung/Vorspannung des Antriebsgurts einzustellen, kann die aktuelle Dehnung des Fördergurts unmittelbar vor Eingreifen der Kopplungsprofile in die Zahnprofile ermittelt werden.

An dieser Stelle sei angemerkt, dass die Kopplungsprofile auch an dem Fördergurt und die Zahnprofile an dem Antriebsgurt vorgesehen sein können.

Die Ermittlung der aktuellen Dehnung des Fördergurts unmittelbar vor Eingreifen der Kopplungsprofile in die Zahnprofile kann über eine entsprechende Berechnung und/oder per Simulation erfolgen, indem der exakte Beladungszustand und die Position des Beladungszustands entlang der Förderstrecke für jede oder zumindest für relevante Positionen ermittelt wird und daraus die sich ergebende Dehnung über die Förderstrecke (digitaler Zwilling).

Die Förderstrecke kann in unterschiedlichen Abschnitten unterschiedlich geneigt sein. Hierbei kann ein Teil der Förderstrecke flach bzw. horizontal verlaufen, ein anderer Teil schräg mit einem bestimmten Winkel nach oben oder unten verlaufen und/oder wiederum ein anderer Teil senkrecht nach oben verlaufen. Durch die sich dadurch ergebenden unterschiedlichen Gewichtskräfte, welche auf den Fördergurt wirken und zusätzlich durch die sich dadurch ergebenden unterschiedlichen Gewichtskräfte aufgrund des Förderguts, wobei zudem das Fördergut nicht gleichmäßig und/oder nicht homogen auf den Fördergurt gefüllt wurde, ergeben sich abhängig von dem jeweiligen E-Modul bzw. den jeweiligen E-Modulen (bei unterschiedlichen Fördergurtteilabschnitten) des Fördergurts unterschiedliche Längen bzw. Längungen/Dehnungen desselben.

Erfindungsgemäß ist es möglich, die sich ergebende Dehnung an jeder Position der Förderstrecke zu ermitteln, insbesondere am Einlauf des Fördergurts zum Antriebsgurt.

Dies kann durch die Aufnahme verschiedener Messgrößen (wie z. B. der Beladung des Fördergurts) und durch die Kennwerte des Fördergurts (Spannungs- /Dehnungsverhalten) sowie des Antriebsgurts erfolgen. Hierbei wird eine permanente digitale Abbildung des Fördersystems erstellt, ein so genannter digitaler Zwilling. Dadurch kann der Dehnungszustand bzw. die Teillänge in bestimmten Teilbereichen des Fördergurts bestimmt werden und so als Stellgröße für die Einstellung der Vorspannung/Dehnung des jeweiligen Förderantriebssystems verwendet werden.

Es kann eine Sensoreinheit vorgesehen sein, die eine Wiegeeinrichtung enthält. Die Wiegeeinrichtung kann das ermittelte Gewicht an die Steuereinheit übermitteln. Das an die Steuereinheit übermittelte Gewicht ist einem vorbestimmten Teilbereich des Fördergurts zugeordnet.

Die Sensoreinheit kann einen Sensor enthalten, der eine Information über eine Füllmenge mit Fördergut an die Steuereinheit übermittelt. Die Steuereinheit kann dazu eingerichtet sein aus dieser Information ein Gewicht zu ermitteln.

Weiterhin können an dem Fördergurt in vorbestimmten Abständen in Längsrichtung der Förderstrecke 19 ein oder mehrere Signalgeber vorgesehen sein. Diese Signalgeber können von einem Positionssensor erfasst werden, der Positionsinformationen an die Steuereinheit übermittelt. Die Steuereinheit kann dazu eingerichtet sein basierend auf den Positionsinformationen das jeweilige Gewicht des Förderguts den vorbestimmten Teilbereichen zuzuordnen. Die Steuereinheit kann folglich dazu eingerichtet sein zu jedem Zeitpunkt genaue Informationen darüber zu besitzen, welcher Fördergurtteilabschnitt sich wo befindet.

Der Signalgeber kann als optischer Signalgeber, als mechanischer Signalgeber, als elektromagnetischer Signalgeber (beispielsweise Hall-Geber) und/oder als Röntgenquelle ausbildet sein. Der entsprechende Positionssensor kann jeweils dazu eingerichtet sein, die Positionssignale zu empfangen.

Die abgegebenen Positionssignale enthalten beispielsweise eine Kennung (ID), welche der Steuereinheit eindeutig mitteilen kann, an welcher Stelle sich welcher Teilbereich des Fördergurts gerade befindet.

Dadurch dass die Steuereinheit darüber informiert ist, an welcher Stelle der Förderstrecke sich der Fördergurt gerade befindet und dadurch dass die Steuereinheit die jeweilige Steigung der Förderstrecke der jeweiligen Teilbereiche der Förderstrecke kennt, dadurch dass die Steuereinheit die jeweilige Fördergutmenge in den jeweiligen Teilbereichen und/oder dadurch dass die Steuereinheit die sich daraus ergebenden Längungen bzw. Längen der Teilbereiche des Fördergurts ermitteln bzw. bestimmten kann, ist es möglich eine optimale Synchronisation des Fördergurts mit dem Antriebsgurt zu erreichen, da die Teilung der Kopplungsprofile des Antriebsgurts exakt auf die jeweiligen ankommenden Abstände der Zahnprofile des Fördergurts eingestellt werden können (beim Einlaufen des Fördergurts zum Antriebsgurt).

Die Steuereinheit kann basierend auf den Gewichtsinformationen in den vorbestimmten Teilbereichen die den Teilbereichen zugeordneten Längen und/oder Längungen des Fördergurts insbesondere entlang eines Steilförderstreckenbereichs S ermitteln.

Weiterhin kann die Steuereinheit dazu eingerichtet sein, die den Teilbereichen zugeordneten Längen und/oder Längungen des Fördergurts über das Eigengewicht des Fördergurts, des erfassten oder ermittelten Gewichts des Förderguts, des bzw. der E-Module des Fördergurts (der Fördergurt kann aus verschiedenen Fördergurtabschnitten mit unterschiedlichen E-Modulen bestehen) und/oder der bzw. den Steigungen des Steilförderstreckenbereichs S zu ermitteln.

Durch das entsprechende Synchronisieren des Antriebsgurts bzw. durch ein Synchronisieren der Dehnung/Spannung des Antriebsgurts kann ein sehr exakter Eingriff der Antriebskomponenten erzielt werden, was zu einer stark erhöhten Lebensdauer der Komponenten und einem reibungsarmen Betrieb mit optimaler Krafteinleitung führt.

Die Steuereinheit ist dazu eingerichtet sein, die ermittelten Längen des Fördergurts in erforderliche Abstände von Kopplungsprofilen des Antriebsgurts umzusetzen. Weiterhin ist die Steuereinheit dazu eingerichtet sein, einen Abstand B von in die Zahnprofile eingreifenden Kopplungsprofilen des Antriebsgurts den Abständen A der Zahnprofile dadurch im Wesentlichen anzugleichen bzw. zu synchronisieren, dass über den Stellantrieb des Förderantriebssystems die Dehnung des Antriebsgurts und damit der Abstand B der Kopplungsprofile entsprechend angepasst wird. Dies kann bspw. dadurch erfolgen, dass der Achsabstand der Umlenkrollen des Antriebsgurts entsprechend angepasst wird und/oder über eine oder mehrere Zusatzrollen, die eine entsprechende Dehnkraft in den Antriebsgurt einzubringen.

Es kann weiterhin möglich sein, die jeweilige Dehnung bzw. Länge der Teilbereiche des Fördergurts und damit die jeweiligen Abstände A der Zahnprofile des Fördergurts über eine Messung zu ermitteln und diese Messgröße dann zu verwenden um die Abstände B der Kopplungsprofile des Antriebsgurts entsprechend einzustellen. Hierbei können beispielsweise in bestimmten Zahnprofilabschnitten auf einzelnen oder allen Zähnen Profilnasen angebracht werden. Diese können dazu verwendet werden, Aufschluss über die Längsdehnung des Fördergurts an der jeweiligen Messposition zu geben.

Selbiges kann bezüglich der Dehnung bzw. der Teilung der Kopplungsprofile des Antriebsgurts erfolgen. Die vorgenannten Profilnasen bzw. Markierungen können bspw. auch an den Kopplungsprofilen des Antriebsgurts angebracht werden. Im laufenden Betrieb kann dann der Abstand dieser Profilnasen gemessen werden und somit kann eine optimierte Synchronisation des Fördergurts mit dem Antriebsgurt erfolgen.

An dieser Stelle sei ausdrücklich angemerkt, dass beispielsweise eine Messung nur des Abstands zweier oder mehrerer Zahnprofile des Fördergurts und/oder der zweier oder mehrerer Kopplungsprofile des Antriebsgurts ausreichen kann.

Die Steuereinheit kann weiterhin dazu eingerichtet sein über eine Erfassungseinheit einen Abstand D zwischen einer Oberkante des Zahnprofils und einer Oberseite des Antriebsgurts zu ermitteln und den Abstand D als rückgeführte Regelgröße für den Achsabstand C bzw. die erforderliche Dehnung/Länge des Antriebsgurts zu verwenden, wobei bei Überschreiten eines vorbestimmten Grenzabstands D_{Limit} der Abstand C bzw. die erforderliche Dehnung/Länge des Antriebsgurts entsprechend angepasst werden kann.

Weiterhin ist ein Verfahren zur Steuerung eines Steilförderers vorgesehen, das ein Gewicht eines Förderguts über eine Sensoreinheit ermitteln kann. Dieses Gewicht kann einem vorbestimmten Teilbereich des Fördergurts zugeordnet werden, wobei die Sensoreinheit dazu eingerichtet sein kann Informationen über das Gewicht an eine Steuereinheit zu übermitteln. Weiterhin kann eine dem vorbestimmten Teilbereich zugeordnete Länge in einem Steilförderbereich des Fördergurts aus den Informationen über das Gewicht durch die Steuereinheit ermittelt werden. Es kann darüber hinaus ein Achsabstand C von Umlenkrollen eines Förderantriebssystems basierend auf den vorbestimmten Teilbereichen zugeordneten Längen eingestellt werden.

Durch die vorgenannten Mittel und Maßnahmen ist es in besonders vorteilhafter Weise möglich, eine optimale Synchronisation von Förder- und Antriebsgurt eines Steilförderers zu realisieren, um dadurch den Verschleiß der Antriebskomponenten stark zu verringern, wodurch eine stark verlängerte Lebensdauer der Antriebskomponenten erzielt werden kann. Weiterhin kann der Antrieb möglichst reibungsarm und passgenau erfolgen.

Weiterhin können auch beispielsweise Ereignisse, wie ein Ausfall eines Förderantriebssystems und damit eine partiell größere Dehnung des Fördergurts durch die erfindungsgemäße Synchronisation von Förder- und Antriebsgurt ausgeglichen werden. Die Erfindung wird im Folgenden exemplarisch mit Bezug auf die beigefügten, schematischen Zeichnungen näher beschrieben. Es zeigen:
Fig. 1 eine schematische Darstellung des Fördersystems,
Fig. 2 eine Darstellung der Steuereinheit mit zugehörigen Einheiten, und
Fig. 3 eine vergrößerte Darstellung des Zwischenraums zwischen dem Fördergurt und dem Antriebsgurt.

Im Folgenden werden verschiedene Beispiele der vorliegenden Erfindung unter Bezugnahme auf die Figuren beschrieben. Gleiche bzw. ähnliche Elemente in den Figuren werden hierbei mit gleichen Bezugszeichen bezeichnet. Die vorliegende Erfindung ist jedoch nicht auf die beschriebenen Ausführungsmerkmale begrenzt, sondern umfasst weiterhin Modifikationen von Merkmalen der beschriebenen Beispiele und Kombination von Merkmalen verschiedener Beispiele im Rahmen des Schutzumfangs der unabhängigen Ansprüche.

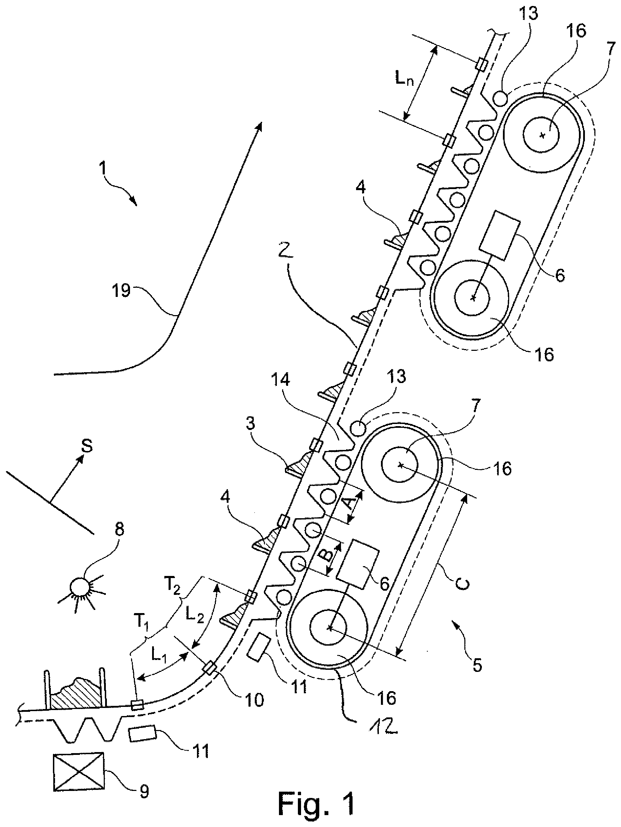

Fig. 1 zeigt ein Fördersystem 1 mit einem Fördergurt 2. An dem Fördergurt 2 sind Tragelemente 3 befestigt. Die Tragelemente 3 dienen dazu, dass das auf den Fördergurt 2 aufgebrachte Fördergut 4 nicht von dem Fördergurt 2 rutscht, wenn dieser auf einer Förderstrecke 19 schräg bzw. senkrecht nach oben bewegt wird.

Die Förderstrecke 19 kann sich je nach Förderaufgabe unterschiedlich gestalten. Beispielsweise kann sich die Förderstrecke 19 zunächst horizontal, dann leicht schräg nach oben oder unten, dann senkrecht, dann wieder leicht schräg nach oben oder unten und anschließend wieder horizontal bewegen, usw. (nicht dargestellt).

Weiterhin sind Förderantriebssysteme 5 dargestellt, wobei beispielhaft nur zwei Förderantriebssysteme 5 gezeigt sind. Selbstverständlich können je nach Anforderungen und Förderstrecke 19 mehrere solcher Förderantriebssysteme 5 vorgesehen sein.

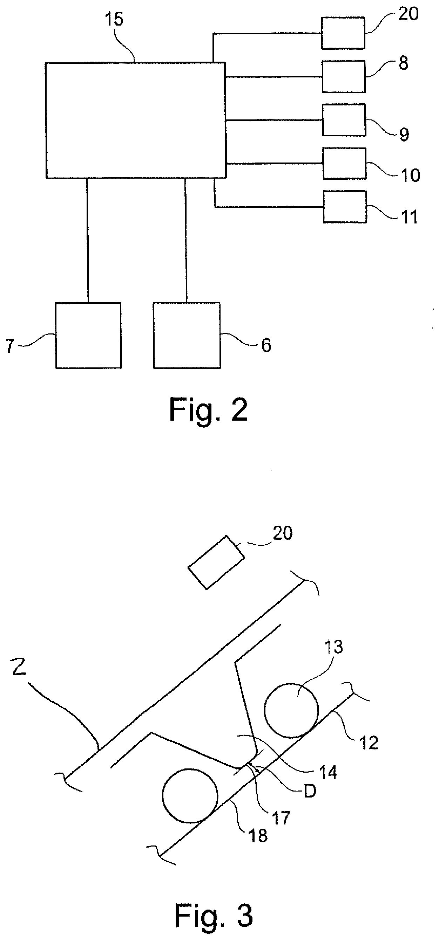

Es kann eine Wiegeeinrichtung 9 vorgesehen sein, die das eingefüllte Fördergut 4 und/oder den Fördergurt 2 mit aufgebrachtem Fördergut 4 wiegen kann. Das ermittelte Gewicht G₁₋ₙ kann dann an eine Steuereinheit 15 weitergegeben werden (siehe Fig. 2). An dem Fördergurt 2 sind Signalgeber 10 vorgesehen. Diese Signalgeber 10 können als optische Signalgeber, als mechanische Signalgeber, als elektromagnetischer Signalgeber und/oder als Röntgenquelle ausgebildet sein. An dieser Stelle sei ausdrücklich angemerkt, dass auch andere Signalgeber bzw. aktive oder passive Markierungen vorgesehen sein können. Auf die Signalgeber 10 abgestimmt, sind ein oder mehrere Positionssensoren 11 vorgesehen, die ein Vorbeilaufen der Signalgeber 10 erfassen. Der Positionssensor 11 und/oder eine zugeordnete Einrichtung ist in der Lage die vorbeilaufenden Signalgeber 10 örtlich auf dem Fördergurt 2 derart zuzuordnen, dass bestimmte Teilbereiche T₁₋ₙ des Fördergurts 2 definiert und erkannt werden können.

Damit ist es beispielsweise für die Vorrichtung zum gesteuerten Antreiben des Steilförderers möglich, eine digitale Abbildung der Förderanlage zu erzeugen und damit einen digitalen Zwilling zu erzeugen. Die Steuereinheit 15 kann damit das von der Wiegeeinrichtung 9 erfasste Gewicht des Fördergurts 2 mit Fördergut 4 einem Teilbereich T₁₋ₙ des Fördergurts 2 zuordnen. Weiterhin kann die Steuereinheit 15 die Gewichte bestimmter Teilbereiche T₁₋ₙ summieren. In der schematischen Darstellung in Fig. 1 würde beispielsweise das Gewicht von vier Teilbereichen T₁₋ₙ des Förderguts 4 (oberes Förderantriebssystem 5) mit dem Gewicht des Fördergurts 2 beginnend vom Austreten aus dem Eingriff des unteren Förderantriebssystems 5 zusammengenommen werden, um eine entsprechende Längung des Fördergurts 2 zu ermitteln. Dadurch kann das Eigengewicht des Fördergurts 2 mit darauf angeordnetem Fördergut 4 berücksichtigt werden. Abhängig von der dadurch ermittelten Längung bzw. Länge L₁₋ₙ der zugehörigen Teilbereiche T₁₋ₙ kann dann bspw. ein Stellantrieb 6 des Förderantriebssystems 5 derart betätigt werden, dass die Spannung bzw. Dehnung des Antriebsgurts 12 derart eingestellt wird, dass die Abstände B der Kopplungsprofile 13 des Antriebsgurts 12 mit den Abständen A der Zahnprofile 14 des Fördergurts 2 synchronisiert sind. Dadurch kann ein optimaler Eingriff der Kopplungsprofile 13 in die Zahnprofile 14 sichergestellt werden, was zu einem stark verminderten Verschleiß durch Relativbewegungen, einer stark verringerten Reibung und damit zu einer längeren Lebensdauer der Antriebskomponenten führt.

In der Fig. 1 sind weiterhin Antriebseinheiten 7 der Förderantriebssysteme 5 dargestellt, die jeweils eine Umlenkrolle 16 antreiben. Diese Umlenkrolle 16 treibt wiederum den Antriebsgurt 12 durch beispielsweise einen Reibschluss an. Der Stellantrieb 6 wirkt beispielsweise auf eine Umlenkrolle 16, wodurch die Umlenkrolle in Längsrichtung bewegt werden kann. Durch eine Bewegung der Umlenkrolle 16 in Längsrichtung kann die Spannung bzw. die Dehnung des Antriebsgurts 12 verstellt bzw. eingestellt werden, damit der Abstand B der Kopplungsprofile 13 eingestellt werden kann. Durch das Einstellen des Abstands B passend zu dem zuvor ermittelten Abstand A der Zahnprofile 14 ist eine optimale Synchronisation des Antriebssystems möglich.

Die Steuereinheit 15 ist in der Lage aus der Kenntnis der Förderstrecke 19 und der vorliegenden Neigung der Förderstrecke 19 die wirkende Gewichtskraft aufgrund des in den Tragelementen 3 befindlichen Förderguts 4 und der Fördergurtlänge zu ermitteln. Dies ist möglich, da vorher über die Wiegeeinrichtung 9 das entsprechende Gewicht G₁₋ₙ ermittelt wurde und einem entsprechenden Teilbereich T₁₋ₙ über die Markierungen und die entsprechenden Positionssensoren 11 zugeordnet wurden.

Folglich ist es möglich, dass die Steuereinheit 15 die Längung in bestimmten Teilbereichen T₁₋ₙ Fördergurts 2 bestimmt und ermittelt, wann diese Längung entlang der Förderstrecke wo auftritt. Durch diese örtliche Zuordnung der Länge bzw. Längungen entlang der Förderstrecke des Fördergurts 2 kann der Antriebsgurt 12 optimal synchronisiert und auf die Längung eingestellt werden.

In Fig. 2 ist schematisch die Steuereinheit 15 dargestellt. Die Steuereinheit 15 ist elektrisch und/oder schnurlos mit dem optischen Sensor 8, der Wiegeeinrichtung 9, den Signalgebern 10, dem bzw. den Positionssensoren 11, dem Stellantrieb 6 und der Antriebseinheit 7 verbunden.

Insbesondere kann beispielsweise durch den optischen Sensor 8 eine Füllung des Fördergurts 2 mit Fördergut 4 erfasst werden. Das optische Signal (beispielsweise ein Bild) kann dann an die Steuereinheit 15 weitergeleitet werden. In der Steuereinheit 15 kann dann die Bildinformation ausgewertet werden, wobei über eine entsprechende Auswertung auf das Gewicht G₁₋ₙ des Förderguts 4 an der aufgenommenen Stelle (in dem speziellen Teilbereich T₁₋ₙ des Fördergurts 2) geschlossen werden kann. Hierzu ist natürlich auch das spezifische Gewicht des jeweilig eingefüllten Förderguts notwendig. Dieses spezifische Gewicht kann vorab in einem nicht dargestellten Speicher der Steuereinheit 15 hinterlegt werden.

Die Steuereinheit 15 kann dann auf entsprechende Längungen bzw. Längen L₁₋ₙ des Fördergurts 2 entlang der Förderstrecke 19 schließen und die Stellantriebe 6 entsprechend ansteuern.

In der Fig. 3 ist beispielhaft die Möglichkeit dargestellt einen Abstand D über einen beispielhaft dargestellten Abstandssensor 20 zu ermitteln. Dieser Abstand D kann zwischen einer Oberseite 18 des Antriebsgurts 12 und einer Oberkante 17 eines Zahnprofils 14 des Fördergurts 2 über den Abstandssensor 20 und/oder eine nicht dargestellte Erfassungseinheit ermittelt werden. Diese Erfassungseinheit bzw. der Abstandssensor 20 kann das entsprechende Erfassungssignal betreffend dem Abstand D an die Steuereinheit 15 übermitteln. Die Steuereinheit 15 kann dann den ermittelten Abstand D mit einem vorab gespeicherten Grenzabstand D_{Limit} vergleichen und bei einem ermittelten Abstand D, der größer ist als der Grenzabstand D_{Limit} darauf schließen, dass die Synchronisation zwischen Antriebsgurt 12 und Fördergurt 2 verbessert werden muss. Dies kann beispielsweise dadurch erfolgen, dass über die Steuereinheit 15 der Stellantrieb 6 des Förderantriebssystems 5 derart angesteuert wird, dass sich ein Abstand D einstellt, der kleiner ist als der Grenzabstand D_{Limit}. Zusammengefasst kann die vorliegende Erfindung in optimaler Weise eine zum gesteuerten Antreiben eines Steilförderers und ein Verfahren zur Steuerung eines Steilförderers schaffen, die einen exakten Eingriff der Kopplungsprofile 13 mit den Zahnprofilen 14 ermöglichen, wodurch der Verschleiß der Antriebselemente minimiert werden kann und die Lebensdauer dieser Komponenten verlängert werden kann. Weiterhin kann ein möglichst reibungsarmer Betrieb sichergestellt werden. Diese sind sehr wichtige Faktor bei derartigen Förderanlagen, da eine Instandsetzung nur mit sehr hohem Aufwand und längeren Standzeiten realisiert werden kann.

## Patentansprüche

1. Vorrichtung zum gesteuerten Antreiben eines Steilförderers, mit
einer Steuereinheit (15),
einem Förderantriebssystem (5) zum Antreiben eines Fördergurts (2), und
einer Sensoreinheit zur Ermittlung eines Gewichts G₁₋ₙ des Förderguts (4), zugeordnet zu einem vorbestimmten Teilbereich T₁₋ₙ des Fördergurts (2), wobei
die Sensoreinheit dazu eingerichtet ist, Informationen über das Gewicht an die Steuereinheit (15) zu übermitteln, **dadurch gekennzeichnet, dass**
die Steuereinheit (15) dazu eingerichtet ist,
aus den Informationen über das Gewicht G₁₋ₙ eine dem vorbestimmten Teilbereich T₁₋ₙ zugeordnete Länge L₁₋ₙ in einem Steilförderbereich S des Fördergurts (2) zu ermitteln und basierend auf den ermittelten den vorbestimmten Teilbereichen T₁₋ₙ zugeordneten Längen L₁₋ₙ eine Dehnung eines Antriebsgurts (12) des Förderantriebssystems (5) einzustellen, wobei
die Dehnung des Antriebsgurts (12) über einen Stellantrieb (6) des Förderantriebssystems (5) eingestellt wird indem die Steuereinheit einen Abstand B von in Zahnprofile (14) des Fördergurts (2) eingreifende Kopplungsprofile (13) des Antriebsgurtes (12) an Abstände A der Zahnprofile (14) angleicht oder indem die Steuereinheit einen Abstand B von in Kopplungsprofile (13) des Fördergurts (2) eingreifende Zahnprofile (14) des Antriebsgurts (12) an Abstände A der Kopplungsprofile (13) angleicht.

2. Vorrichtung nach Anspruch 1, wobei
der Stellantrieb (6) zur Einstellung der Dehnung des Antriebsgurts (12) und damit eines Abstands B von Kopplungsprofilen (13) des Antriebsgurts (12) einen Achsabstand C von Umlenkrollen (16) des Antriebsgurts (12) einstellt und/oder über eine Zusatzrolle eine entsprechende Dehnkraft auf den Antriebsgurt (12) aufbringt.

3. Vorrichtung nach zumindest einem der vorangehenden Ansprüche, wobei
die Sensoreinheit eine Wiegeeinrichtung (9) enthält, die das Gewicht an die Steuereinheit (15) übermittelt.

4. Vorrichtung nach zumindest einem der vorangehenden Ansprüche, wobei
die Sensoreinheit (8) einen optischen Sensor enthält, der eine Information über eine Füllmenge mit Fördergut (4) an die Steuereinheit (15) übermittelt und die Steuereinheit (15) dazu eingerichtet ist aus dieser Information ein Gewicht zu ermitteln.

5. Vorrichtung nach zumindest einem der vorangehenden Ansprüche, wobei
die Sensoreinheit (8) einen Ultraschall- oder Röntgensensor enthält, der eine Information über eine Füllmenge mit Fördergut (4) und/oder spezifisches Gewicht des Förderguts (4) an die Steuereinheit (15) übermittelt und die Steuereinheit (15) dazu eingerichtet ist aus dieser Information ein Gewicht zu ermitteln.

6. Vorrichtung nach zumindest einem der vorangehenden Ansprüche, wobei
an dem Fördergurt (2) in vorbestimmten Abständen in Längsrichtung der Förderstrecke (19) Signalgeber (10) vorgesehen sind, deren Positionssignale von einem Positionssensor (11) erfasst werden, der Positionsinformationen an die Steuereinheit (15) übermittelt, wobei
die Steuereinheit (15) dazu eingerichtet ist basierend auf den Positionsinformationen das Gewicht G₁₋ₙ des Förderguts (4) den vorbestimmten Teilbereichen T₁₋ₙ zuzuordnen.

7. Vorrichtung nach Anspruch 6, wobei
der Signalgeber (10) als ein optischer Signalgeber, als ein mechanischer Signalgeber, als elektromagnetischer Signalgeber und/oder als Röntgenquelle ausgebildet ist.

8. Vorrichtung nach zumindest einem der vorangehenden Ansprüche, wobei
die Steuereinheit (15) dazu eingerichtet ist basierend auf den Gewichtsinformationen in den vorbestimmten Teilbereichen T₁₋ₙ die den Teilbereichen T₁₋ₙ zugeordneten Längen L₁₋ₙ und/oder Längungen des Fördergurts (2) insbesondere entlang eines Steilförderstreckenbereich S oder einzelner Positionen an dem Steilförderstreckenbereich S zu ermitteln.

9. Vorrichtung nach Anspruch 8, wobei
die Steuereinheit (15) dazu eingerichtet ist die den Teilbereichen T₁₋ₙ zugeordneten Längen L₁₋ₙ und/oder Längungen des Fördergurts (2) über das Eigengewicht des Fördergurts (2), des erfassten oder ermittelten Gewichts G₁₋ₙ des Förderguts (4), des bzw. der Fördergurtabschnitten zugeordneten E-Module des Fördergurts (2), einer Vorspannung des Fördergurts (2) und/oder der bzw. den Steigungen des Steilförderstreckenbereichs S zu ermitteln.

10. Vorrichtung nach Anspruch 1, wobei
die Steuereinheit (15) dazu eingerichtet ist
die ermittelten Längen L₁₋ₙ in Abstände A₁₋ₙ von Zahnprofilen (14) des Fördergurts (2) umzusetzen und
einen Abstand B von in die Zahnprofile (14) eingreifenden Kopplungsprofilen (13) des Antriebsgurts (12) den Abständen A₁₋ₙ oder einer zumindest doppelten Teilung derselben dadurch im Wesentlichen anzugleichen bzw. zu synchronisieren, dass über den Stellantrieb (6) des Förderantriebssystems (5) die Dehnung des Antriebsgurts (12) entsprechend angepasst wird.

11. Vorrichtung für Steilförderer nach zumindest einem der vorangehenden Ansprüche, wobei
die Steuereinheit (15) dazu eingerichtet ist, die in einem elastischen Bereich liegende Längung bzw. Länge L₁₋ₙ des Fördergurts (2) hervorgerufen durch die Gewichtskraft des Fördergurts (2) und das Gewicht des Förderguts (4) im Steilförderstreckenbereich S zu ermitteln und den Abstand B der Kopplungsprofile (13) des Antriebsgurts (12) durch eine entsprechende elastische Dehnung des Antriebsgurt (12) über den Stellantrieb (6) im Wesentlichen an die Abstände A₁₋ₙ der Zahnprofile (14) anzugleichen.

12. Vorrichtung für Steilförderer nach zumindest einem der vorangehenden Ansprüche, wobei
die Steuereinheit (15) dazu eingerichtet ist über eine Erfassungseinheit einen Abstand D zwischen einer Oberkante (17) des Zahnprofils (14) und einer Oberseite (18) des Antriebsgurts (12) zu ermitteln und den Abstand D als rückgeführte Regelgröße für die Einstellung der erforderlichen Dehnung des Antriebsgurts (12) und damit der Abstände B der Kopplungsprofile (13) zu verwenden, wobei
bei Überschreiten eines vorbestimmten Grenzabstands Dₗᵢₘᵢₜ die Dehnung entsprechend angepasst wird.

13. Verfahren zur Steuerung eines Steilförderers, mit den folgenden Schritten:
Ermittlung eines Gewichts G₁₋ₙ eines Förderguts (4) über eine Sensoreinheit, zugeordnet zu einem vorbestimmten Teilbereich T₁₋ₙ des Fördergurts (2), wobei
die Sensoreinheit dazu eingerichtet ist, Informationen über das Gewicht G₁₋ₙ an eine Steuereinheit (15) zu übermitteln, **dadurch gekennzeichnet, dass** das Verfahren weiter folgende Schritte umfasst
Ermitteln einer dem vorbestimmten Teilbereich T₁₋ₙ zugeordnete Länge L₁₋ₙ in einem Steilförderbereich S des Fördergurts (2) aus den Informationen über das Gewicht G₁₋ₙ durch die Steuereinheit (15), und
Einstellen einer Dehnung eines Antriebsgurts (12) eines Förderantriebssystems (5) basierend auf den vorbestimmten Teilbereichen T₁₋ₙ zugeordneten Längen L₁₋ₙ, wobei
die Dehnung des Antriebsgurts (12) über einen Stellantrieb (6) des Förderantriebssystems (5) eingestellt wird indem ein Abstand B von in Zahnprofile (14) des Fördergurts (2) eingreifende Kopplungsprofile (13) des Antriebsgurtes (12) an Abstände A der Zahnprofile (14) angeglichen wird oder indem ein Abstand B von in Kopplungsprofile (13) des Fördergurts (2) eingreifende Zahnprofile (14) des Antriebsgurts (12) an Abstände A der Kopplungsprofile (13) angeglichen wird.

## Claims

1. A device for controlled driving of a steep conveyor, comprising
a control unit (15),
a conveyor drive system (5) for driving a conveyor belt (2); and
a sensor unit (8) for determining a weight G₁₋ₙ of the material (4) to be conveyed, assigned to a predetermined section T₁₋ₙ of the conveyor belt (2), wherein the sensor unit is configured to transmit information about the weight to the control unit (15),
**characterized in that**
the control unit (15) is configured to
determine from the information about the weight G₁₋ₙ a length L₁₋ₙ assigned to the predetermined section T₁₋ₙ in a steep conveyor region S of the conveyor belt (2), and based on the determined lengths L₁₋ₙ assigned to the predetermined sections T₁₋ₙ adjust a strain of a drive belt (2) of the conveyor drive system (5), wherein
the strain of the drive belt (2) is adjusted via an actuator (6) of the conveyor drive system (5) by the control unit matching a distance B of coupling profiles (13) of the drive belt (12) engaging in tooth profiles (14) of the conveyor belt (2) with distances A of the tooth profiles (14), or by the control unit matching a distance B of tooth profiles (14) of the drive belt (12) engaging in coupling profiles (13) of the conveyor belt (2) with distances A of the coupling profiles (13).

2. The device according to claim 1, wherein
the actuator (6) for adjusting the strain of the drive belt (12) and thus a distance B from coupling profiles (13) of the drive belt (12) adjusts a center distance C from deflection rollers (16) of the drive belt (12) and/or applies a corresponding strain force to the drive belt (12) via an additional roller.

3. The device according to at least one of the preceding claims, wherein
the sensor unit includes a weighing device (9) which transmits the weight to the control unit (15).

4. The device according to at least one of the preceding claims, wherein
the sensor unit (8) includes an optical sensor which transmits information about a filling quantity with material to be conveyed (4) to the control unit (15) and the control unit (15) is configured to determine a weight from this information.

5. The device according to at least one of the preceding claims, wherein
the sensor unit (8) includes an ultrasonic or X-ray sensor which transmits information about a filling quantity with material to be conveyed (4) and/or specific weight of the material to be conveyed (4) to the control unit (15) and the control unit (15) is configured to determine a weight from this information.

6. The device according to at least one of the preceding claims, wherein
signal transmitters (10) are provided on the conveyor belt (2) at predetermined distances in the longitudinal direction of the conveyor line (19), the position signals of which signal transmitters are detected by a position sensor (11) which transmits position information to the control unit (15),
wherein the control unit (15) is configured to assign the weight G₁₋ₙ of the material to be conveyed (4) to the predetermined sections T₁₋ₙ on the basis of the position information.

7. The device according to claim 6, wherein
the signal transmitter (10) is configured as an optical signal transmitter, as a mechanical signal transmitter, as an electromagnetic signal transmitter and/or as an X-ray source.

8. The device according to at least one of the preceding claims, wherein
the control unit (15) is configured to determine, on the basis of the weight information in the predetermined sections T₁₋ₙ, the lengths L₁₋ₙ and/or elongations of the conveyor belt (2) assigned to the sections T₁₋ₙ, in particular along a steep conveyor section region S or individual positions on the steep conveyor section region S.

9. The device according to claim 8, wherein
the control unit (15) is configured to determine the lengths L₁₋ₙ and/or elongations of the conveyor belt (2) assigned to the sections T₁₋ₙ via the dead weight of the conveyor belt (2), the detected or determined weight G₁₋ₙ of the material to be conveyed (4), the E-modules of the conveyor belt (2) assigned to the conveyor belt section(s), a pretension of the conveyor belt (2) and/or the inclinations of the steep conveyor section region S.

10. The device according to claim 1, wherein
the control unit (15) is configured to
implement the determined lengths L₁₋ₙ into distances A₁₋ₙ from tooth profiles (14) of the conveyor belt (2), and
substantially match or synchronize a distance B of coupling profiles (13) of the drive belt (12) engaging in the tooth profiles (14) with the distances A₁₋ₙ or an at least double separation thereof by adapting the strain of the drive belt (12) accordingly via the actuator (6) of the conveyor drive system (5).

11. The device for steep conveyors according to at least one of the preceding claims, wherein
the control unit (15) is configured to determine the elongation or length L₁₋ₙ of the conveyor belt (2) in an elastic region caused by the weight force of the conveyor belt (2) and the weight of the material to be conveyed (4) in the steep conveyor section region S and to substantially match the distance B of the coupling profiles (13) of the drive belt (12) with the distances A₁₋ₙ of the tooth profiles (14) by a corresponding elastic strain of the drive belt (12) via the actuator (6).

12. The device for steep conveyors according to at least one of the preceding claims, wherein
the control unit (15) is configured to determine via a detection unit a distance D between an upper edge (17) of the tooth profile (14) and an upper side (18) of the drive belt (12) and to use the distance D as a fed-back controlled variable for adjusting the required strain of the drive belt (12) and thus the distances B of the coupling profiles (13),
wherein the strain is adapted accordingly when a predetermined limit distance Dₗᵢₘᵢₜ is exceeded.

13. A method for controlling a steep conveyor, comprising the steps of:
determining a weight G₁₋ₙ of a material to be conveyed (4) via a sensor unit assigned to a predetermined section T₁₋ₙ of the conveyor belt (2), wherein
the sensor unit is configured to transmit information about the weight G₁₋ₙ to a control unit (15),
**characterized in that** said method further comprises the steps of
determining a length L₁₋ₙ assigned to the predetermined section T₁₋ₙ in a steep conveyor section S of the conveyor belt (2) from the information about the weight G₁₋ₙ by the control unit (15), and
adjusting a strain of a drive belt (12) of a conveyor drive system (5) based on lengths L₁₋ₙ assigned to predetermined sections T₁₋ₙ, wherein
the strain of the drive belt (2) is adjusted via an actuator (6) of the conveyor drive system (5) by matching a distance B of coupling profiles (13) of the drive belt (12) engaging in tooth profiles (14) of the conveyor belt (2) with distances A of the tooth profiles (14) or by matching a distance B of tooth profiles (14) of the drive belt (12) engaging in coupling profiles (13) of the conveyor belt (2) with distances A of the coupling profiles (13).

## Revendications

1. Dispositif de commande d'entraînement d'un convoyeur à forte pente, comprenant
une unité de commande (15),
un système d'entraînement de convoyeur (5) destiné à entraîner une bande transporteuse (2), et
une unité capteur destinée à déterminer un poids G₁₋ₙ du produit convoyé (4), associée à une zone partielle T₁₋ₙ prédéterminée de la bande transporteuse (2), dans lequel
l'unité capteur est configurée pour transmettre des informations concernant le poids à l'unité de commande (15),
**caractérisé en ce que**
l'unité de commande (15) est configurée pour
à partir des informations concernant le poids G₁₋ₙ, déterminer une longueur L₁₋ₙ, associée à la zone partielle T₁₋ₙ prédéterminée, dans une zone de convoyeur à pente S de la bande transporteuse (2) et, sur la base des longueurs L₁₋ₙ associées aux zones partielles T₁₋ₙ prédéterminées, régler une tension d'une bande d'entraînement (12) du système d'entraînement de convoyeur (5), dans lequel
la tension de la bande d'entraînement (12) est réglée par l'intermédiaire d'un actionneur (6) du système d'entraînement de convoyeur (5), l'unité de commande adaptant une distance B de profils d'accouplement (13), en engagement dans des profils dentés (14) de la bande transporteuse (2), de la bande entraînement (12) à des distances A des profils dentés (14), ou l'unité de commande adaptant une distance B des profils dentés (14), en engagement dans des profils d'accouplement (14) de la bande transporteuse (2), de la bande entraînement (12) à des distances A des profils d'accouplement (13).

2. Dispositif selon la revendication 1, dans lequel
l'actionneur (6) destiné à régler la tension de la bande d'entraînement (12), et donc une distance B de profils d'accouplement (13) de la bande d'entraînement (12), règle un entraxe C de poulies de renvoi (16) de la bande d'entraînement (12) et/ou applique une force de tension correspondante sur la bande entraînement (12) par l'intermédiaire d'une poulie supplémentaire.

3. Dispositif selon l'une au moins des revendications précédentes, dans lequel
l'unité capteur comprend un dispositif de pesage (9) qui transmet le poids à l'unité de commande (15).

4. Dispositif selon l'une au moins des revendications précédentes, dans lequel
l'unité capteur (8) comprend un capteur optique qui transmet à l'unité de commande (15) une information concernant une quantité de remplissage de produits convoyés (4), et l'unité de commande (15) est configurée pour déterminer un poids à partir de cette information.

5. Dispositif selon l'une au moins des revendications précédentes, dans lequel
l'unité capteur (8) comprend un capteur à ultrasons ou à rayons X qui transmet à l'unité de commande (15) une information concernant une quantité de remplissage de produits convoyés (4) et/ou un poids spécifique du produit convoyé (4), et l'unité de commande (15) est configurée pour déterminer un poids partir de cette information.

6. Dispositif selon l'une au moins des revendications précédentes, dans lequel
il est prévu, au niveau de la bande transporteuse (2), à des distances prédéterminées dans une direction de la longueur du trajet de convoyeur (19), un émetteur de signaux (10) dont des signaux de position sont détectés par un capteur de position (11) qui transmet des informations de position à l'unité de commande (15), dans lequel
l'unité de commande (15) est configurée pour, sur la base des informations de position, associer le poids G₁₋ₙ du produit convoyé (4) aux zones partielles T₁₋ₙ prédéterminées.

7. Dispositif selon la revendication 6, dans lequel
l'émetteur de signaux (10) est réalisé sous la forme d'un émetteur de signaux optique, d'un émetteur de signaux mécanique, d'un émetteur de signaux électromagnétique et/ou d'une source à rayons X.

8. Dispositif selon l'une au moins des revendications précédentes, dans lequel
l'unité de commande (15) est configurée pour, sur la base des informations de poids dans les zones partielles T₁₋ₙ prédéterminées, déterminer les longueurs L₁₋ₙ associées aux zones partielles T₁₋ₙ prédéterminées et/ou des allongements de la bande transporteuse (2), en particulier le long d'une zone de trajet de convoyeur à forte pente S ou de différentes positions au niveau de la zone de trajet de convoyeur à forte pente S.

9. Dispositif selon la revendication 8, dans lequel
l'unité de commande (15) est configurée pour déterminer les longueurs L₁₋ₙ associées aux zones partielles T₁₋ₙ et/ou des allongements de la bande transporteuse (2) par l'intermédiaire du poids propre de la bande transporteuse (2), du poids G₁₋ₙ détecté ou déterminé de la bande transporteuse (4), des e-modules de la bande transporteuse (2) associé(s) au/aux tronçon(s) de bande transporteuse, d'une précontrainte de la bande transporteuse (2) et/ou de l'inclinaison ou des inclinaisons de la zone de trajet de convoyeur à pente (S).

10. Dispositif selon la revendication 1, dans lequel
l'unité de commande (15) est configurée pour
mettre en œuvre les longueurs déterminées L₁₋ₙ à des distances A₁₋ₙ de profils dentés (14) de la bande transporteuse (2), et
ainsi, adapter ou synchroniser une distance B des profils d'accouplement (14), en engagement dans les profils dentés (14), de la bande entraînement (12) par rapport aux distances A₁₋ₙ ou à une division au moins par deux de celles-ci, manière à adapter en correspondance la tension de la bande d'entraînement (12) par l'intermédiaire de l'actionneur (6) du système d'entraînement de convoyeur (5).

11. Dispositif pour un convoyeur à forte pente selon l'une au moins des revendications précédentes, dans lequel
l'unité de commande (15) est configurée pour déterminer un allongement ou des longueurs L₁₋ₙ de la bande transporteuse (2), se trouvant dans une zone élastique, résultant de la force de gravité de la bande transporteuse (2) et du le poids du produit transporté (4), dans la zone de trajet de convoyeur apparente (S), et pour adapter sensiblement la distance B des profils d'accouplement (13) de la bande entraînement (12) aux distances A₁₋ₙ des profils dentés (14) au moyen d'une tension élastique correspondante de la bande d'entraînement (12) par l'intermédiaire de l'actionneur (6).

12. Dispositif pour convoyeur à forte pente selon l'une au moins des revendications précédentes, dans lequel
l'unité de commande (15) est configurée pour déterminer, par l'intermédiaire d'une unité de détection, une distance D entre un bord supérieur (17) du profil denté (14) et une face supérieure (18) de la bande d'entraînement (12), et pour utiliser la distance D comme grandeur de régulation en boucle fermée pour le réglage de la tension requise de la bande entraînement (12), et donc des distances B des profils accouplement (13), dans lequel la tension est adaptée en correspondance, en cas de dépassement d'une distance seuil Dₗᵢₘᵢₜ prédéterminée.

13. Procédé de commande d'un convoyeur à forte pente comprenant les étapes suivantes consistant à :
déterminer un poids G₁₋ₙ du produit convoyé (4), via une unité capteur, associée à une zone partielle T₁₋ₙ prédéterminée de la bande transporteuse (2), dans lequel
l'unité capteur est configurée pour transmettre des informations concernant le poids à une unité de commande (15),
**caractérisé en ce que** le procédé comprend les étapes supplémentaires suivantes consistant à :
déterminer une longueur L₁₋ₙ, associée à la zone partielle T₁₋ₙ prédéterminée, dans une zone de convoyeur à forte pente S de la bande transporteuse (2), à partir des informations concernant le poids G₁₋ₙ, via l'unité de commande (15), et
régler une tension d'une bande d'entraînement (12) d'un système d'entraînement de convoyeur (5), sur la base des longueurs L₁₋ₙ associées aux zones partielles T₁₋ₙ prédéterminées, dans lequel
la tension de la bande d'entraînement (12) est réglée par l'intermédiaire d'un actionneur (6) du système d'entraînement de convoyeur (5), en adaptant une distance B de profils d'accouplement (13), en engagement dans des profils dentés (14) de la bande transporteuse (2), de la bande entraînement (12) à des distances A des profils dentés (14), ou en adaptant une distance B des profils dentés (14), en engagement dans des profils d'accouplement (14) de la bande transporteuse (2), de la bande d'entraînement (12) à des distances A des profils d'accouplement (13).
